# EUROPEAN PATENT SPECIFICATION

(11) **EP 4 274 017 B1**
(45) Date of publication and mention of the grant of the patent: **28.01.2026**
(21) Application number: 22896124.9
(22) Date of filing: 18.11.2022
(51) Int. Cl.: H01M 50/569, H01M 50/531, H01M 50/124, H01M 50/178, H01M 50/105, H01M 50/583, H01M 50/211, H01M 10/48, H01M 10/42, H01M 50/126

(54) **POUCH-SHAPED BATTERY CELL INCLUDING SENSING MEMBER AND BATTERY MODULE INCLUDING THE SAME**
BEUTELARTIGE BATTERIEZELLE MIT SENSORELEMENT UND BATTERIEMODUL DAMIT
ÉLÉMENT DE BATTERIE DE TYPE POCHE COMPRENANT UN ÉLÉMENT DE DÉTECTION, ET MODULE DE BATTERIE COMPRENANT CELUI-CI

(30) Priority: 18.11.2021 KR 20210159066
(43) Date of publication of application: 08.11.2023
(73) Proprietor: LG Energy Solution, Ltd., Seoul 07335 (KR)
(72) Inventor: HWANG, Ji Won, Daejeon 34122 (KR)
(74) Representative: Plasseraud IP
(86) International application number: PCT/KR2022/018268
(87) International publication number: WO 2023/090927

(56) References cited:
- EP-B1- 2 025 019
- JP-A- 2004 031 270
- JP-A- 2004 031 270
- JP-A- 2012 195 084
- JP-A- 2012 195 084
- KR-A- 20170 066 896
- KR-A- 20180 043 571
- KR-A- 20180 106 689
- US-A1- 2018 151 918
- US-A1- 2020 076 016

## Description

### [Technical Field]

This application claims the benefit of priority to Korean Patent Application No. 2021-0159066 filed on November 18, 2021.

The present invention relates to a pouch-shaped battery cell including a sensing member and a battery module including the same. More particularly, the present invention relates to a pouch-shaped battery cell configured such that a sensing member configured to detect voltage is mounted in a pouch-shaped battery case and a battery module including the same.

### [Background Art]

A lithium secondary battery, which is capable of being charged and discharged, has been widely used as an energy source for wireless mobile devices or wearable devices, which are worn on bodies, and has also been used as an energy source for electric vehicles and hybrid electric vehicles presented as alternatives to existing gasoline and diesel vehicles, which cause air pollution.

Depending on the material and shape of a battery case, the lithium secondary battery may be classified as a cylindrical battery cell having an electrode assembly mounted in a metal can, a prismatic battery cell having an electrode assembly mounted in a metal can, or a pouch-shaped battery cell having an electrode assembly mounted in a battery case made of a laminate sheet. The pouch-shaped battery cell has advantages of easy deformation and high energy density.

In general, a battery pack for electric vehicles is disposed at a lower part of a vehicle, and therefore there is a trend to maximally reduce the height of the battery pack. However, a battery cell having a large length is manufactured in order to maximally secure the capacity of the battery pack.

As the pouch-shaped battery cell is developed such that the thickness of the pouch-shaped battery cell is decreased and the length of the pouch-shaped battery cell is increased, there is a problem in that an additional part or space is needed such that a battery management system (BMS) can measure the voltages of all pouch-shaped battery cells in a battery module including bidirectional battery cells each having a positive electrode lead and a negative electrode lead protruding in opposite directions.

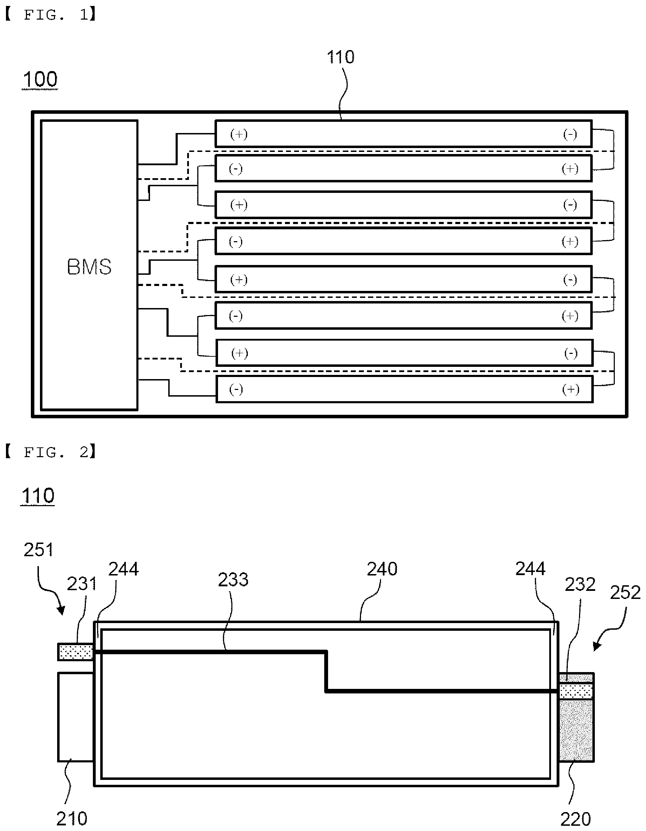

In connection therewith, FIG. 1 is a vertical sectional view of a conventional battery module.

Referring to FIG. 1, the battery module 100 includes a plurality of stacked pouch-shaped battery cells 110, and each of the pouch-shaped battery cells 110 is a bidirectional battery cell having a positive electrode lead and a negative electrode lead protruding in opposite directions. A BMS is disposed at one side of a stack of the stacked pouch-shaped battery cells 110.

In order to measure voltages of all of the pouch-shaped battery cells, it is necessary for the BMS to be electrically connected to the battery cells. Electrode leads protruding toward the BMS may be easily directly coupled to the BMS, whereas the distance between the BMS and electrode leads protruding in the direction opposite the BMS is large, and therefore a separate structure for connection with the BMS is needed.

For example, in FIG. 1, for electrical connection between the BMS and the electrode lead, a separate connection member disposed at a path shown by a dotted line and constituted by a plate and a wire is needed. In addition, a predetermined space is also needed to dispose the connection member between the pouch-shaped battery cells 110.

In consideration of the trend to reduce the height of the battery pack, however, there is a problem in that the height of the battery pack is unnecessarily increased when the separate connection member is added, as shown in FIG. 1.

In connection therewith, Patent Document 1, which relates to a dual tab type cell received in an envelope-type sheathing member, wherein a positive electrode tab and a negative electrode tab are stretched from the sheathing member in opposite directions, discloses a dual tab type cell having a voltage detection terminal disposed on at least one of the positive electrode tab and the negative electrode tab to detect tab voltage having polarity opposite the polarity of the tab.

In Patent Document 1, however, a separate space is needed in order to extend the voltage detection terminal out of a battery case.

Therefore, there is a need to develop a connection method in which, when a plurality of pouch-shaped battery cells each having a large length is stacked, a connection structure for measurement of voltages of all of the battery cells is achieved while the capacity of the pouch-shaped battery cell is not reduced or the volume of the pouch-shaped battery cell is not increased.

### (Prior Art Document)

(Patent Document 1) Japanese Registered Patent Publication No. 3896911 (2007.01.05) JP 2004 031270 discloses a double-tabbed cell and battery pack.
JP 2012 195084 discloses a battery internal pressure state detection device.
EP 2025019 discloses a middle or large-sized battery module. US 2020/0076016 discloses a sensored battery pouch.

### [Disclosure]

### [Technical Problem]

The present invention has been made in view of the above problems, and it is an object of the present invention to provide a pouch-shaped battery cell including a sensing member configured such that, when a plurality of bidirectional pouch-shaped battery cells is stacked, voltages of all of the battery cells can be measured while the capacity of the pouch-shaped battery cell is not reduced or the volume of the pouch-shaped battery cell is not increased and a battery module including the same.

### [Technical Solution]

In order to accomplish the above object, the present invention provides a pouch-shaped battery cell including a pouch-shaped battery case and an electrode assembly received in the pouch-shaped battery case, the electrode assembly having a plurality of positive electrodes and a plurality of negative electrodes, positive electrode tabs and negative electrode tabs extending in opposite directions respectively from opposite ends of the electrode assembly in an overall length direction, a positive electrode lead coupled to the positive electrode tabs and a negative electrode lead coupled to the negative electrode tabs, the positive and negative electrode leads protruding outwards from the pouch-shaped battery case through a sealed portion of the pouch-shaped battery case, wherein the pouch-shaped battery case has a sensing member configured to detect a voltage mounted therein.

The sensing member includes a sensing lead and a wire, the sensing lead extends outwards from an outer periphery of the pouch-shaped battery case, and the wire is mounted in the pouch-shaped battery case.

The pouch-shaped battery case includes an outer coating layer, a metal layer, and an inner adhesive layer, and the wire is located between the outer coating layer and the metal layer or between the inner adhesive layer and the metal layer.

An insulation layer may be interposed between the wire and the metal layer.

The sensing lead may include a first sensing lead and a second sensing lead, the first and second sensing leads being located respectively at opposite ends of the wire.

Opposite ends of the pouch-shaped battery case in the overall length direction may include a first end and a second end, the first sensing lead may extend outwards from the first end through the sealed portion, and the second sensing lead may extend outwards from the second end through the sealed portion.

The positive electrode lead and the first sensing lead may extend outwards from the first end through the sealed portion, the negative electrode lead and the second sensing lead may extend outwards from the second end through the sealed portion, the first sensing lead may not overlap the positive electrode lead, and the second sensing lead may overlap the negative electrode lead.

The negative electrode lead and the first sensing lead may extend outwards from the first end through the sealed portion, the positive electrode lead and the second sensing lead may extend outwards from the second end through the sealed portion, the first sensing lead may not overlap the negative electrode lead, and the second sensing lead may overlap the positive electrode lead.

The size of each of the first sensing lead and the second sensing lead may be less than the size of each of the positive electrode lead and the negative electrode lead.

The sensing member may include a fuse.

The present invention provides a battery module comprising the pouch-shaped battery cell, the battery module including a battery cell stack comprising a plurality of pouch-shaped battery cells is stacked in tight contact with each other, a module housing containing the battery cell stack therein, a BMS disposed outside a first end of the battery cell stack, the first end of the battery cell stack being one of opposite ends of the battery cell stack in an overall length direction, and a busbar plate coupled to a sensing lead and an electrode lead, the busbar plate having a sensing lead weld portion and an electrode lead weld portion.

The BMS may be connected to the sensing lead and the electrode lead, the BMS being configured to measure voltage of each of the pouch-shaped battery cells.

In addition, the present invention may provide various combinations of the above solving means.

### [Advantageous Effects]

As is apparent from the above description, a pouch-shaped battery cell according to the present invention is configured such that a sensing member for voltage detection is mounted in a pouch-shaped battery case, whereby the voltage detection member may be provided without increase in volume of the pouch-shaped battery cell.

In addition, since the sensing member is connected to an electrode terminal protruding to the side opposite a voltage measurement device, the sensing member is connected to the voltage measurement device without a separator connection member, whereby both a positive electrode and a negative electrode of one battery cell may be electrically connected to the voltage measurement device.

In addition, a fuse is provided at the sensing member, whereby ignition and explosion may be prevented, and therefore it is possible to improve safety.

### [Description of Drawings]

FIG. 1 is a vertical sectional view of a conventional battery module.
FIG. 2 is a plan view of a pouch-shaped battery cell according to the present invention.
FIG. 3 is an exploded perspective view of FIG. 2.
FIG. 4 is an exploded perspective view of a pouch-shaped battery case according to an embodiment.
FIG. 5 is an exploded perspective view of a pouch-shaped battery case according to another embodiment.
FIG. 6 is a plan view of a battery module according to the present invention.
FIG. 7 is a perspective view of the battery module according to the present invention.
FIG. 8 is a plan view of a busbar plate according to the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

Embodiments of the present invention will be described in detail with reference to the accompanying drawings.

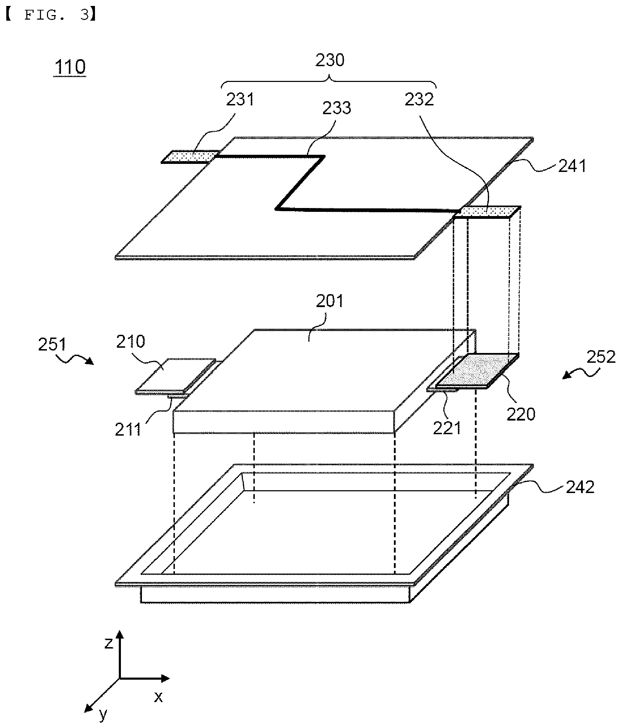

FIG. 2 is a plan view of a pouch-shaped battery cell according to the present invention, and FIG. 3 is an exploded perspective view of FIG. 2.

Referring to FIGs. 2 and 3, the pouch-shaped battery cell 110 according to the present invention has an electrode assembly 201 received in a pouch-shaped battery case 240, and the pouch-shaped battery case 240 includes a lower case 242 having an electrode assembly receiving portion formed therein and an upper case 241 thermally fused to the lower case 242.

Unlike what is shown in FIG. 3, the electrode assembly receiving portion may be formed in the upper case or may be formed in each of the upper case and the lower case. In addition, although the upper case 241 and the lower case 242 are shown as being separated from each other in FIG. 3, the upper case and the lower case may be connected to each other at any one outer periphery thereof, the connected part may be bent, and the upper case and the lower case may be thermally fused to each other.

The electrode assembly 201 includes a plurality of positive electrodes and a plurality of negative electrodes, positive electrode tabs 211 and negative electrode tabs 221 extend in opposite directions respectively from opposite ends of the electrode assembly in an overall length direction x, a positive electrode lead 210 coupled to the positive electrode tabs 211 and a negative electrode lead 220 coupled to the negative electrode tabs 221 protrude outwards from the pouch-shaped battery case 240 through a sealed portion 244 of the pouch-shaped battery case, and the pouch-shaped battery case has a sensing member 230 configured to detect voltage mounted therein.

The sensing member 230 includes a first sensing lead 231, a second sensing lead 232, and a wire 233, and the first sensing lead 231 and the second sensing lead 232 are located respectively at opposite ends of the wire 233. The first sensing lead 231 and the second sensing lead 232 extend outwards from the outer periphery of the pouch-shaped battery case 240, and the wire 233 is mounted in the pouch-shaped battery case.

In FIGs. 2 and 3, the wire of the sensing member is shown as being visible from the outside for convenience of description; however, the wire is mounted in the pouch-shaped battery case.

Opposite ends of the pouch-shaped battery case 240 in the overall length direction x include a first end 251 and a second end 252, the first sensing lead 231 extends outwards from the first end 251 through the sealed portion 244, and the second sensing lead 232 extends outwards from the second end 252 through the sealed portion 244.

In a concrete example, the positive electrode lead 210 and the first sensing lead 231 extend outwards from the first end 251 through the sealed portion 244, the negative electrode lead 220 and the second sensing lead 232 extend outwards from the second end 252 through the sealed portion 244, the first sensing lead 231 is disposed so as not to overlap the positive electrode lead 210, and the second sensing lead 232 is disposed so as to overlap the negative electrode lead 220. At this time, the second sensing lead 232 and the negative electrode lead 220 may be coupled to each other by welding.

The second sensing lead 232 and the negative electrode lead 220 are coupled to each other, as described above, whereby the second sensing lead and the negative electrode lead are electrically connected to each other. Consequently, the voltage of the negative electrode lead 220 may be measured by the first sensing lead 231 through the second sensing lead 232 and the wire 233.

Meanwhile, an insulative protective film configured to secure the force of tight contact with the pouch-shaped battery case may be added to an outer surface of each of the positive electrode lead and the negative electrode lead. In this case, the x-direction length of the second sensing lead may be greater than the x-direction length of the insulative protective film such that the end of the second sensing lead can be coupled to the negative electrode lead.

In FIGs. 2 and 3, the positions of the positive electrode lead and the negative electrode lead are reversed. The negative electrode lead and the first sensing lead extend outwards from the first end through the sealed portion, the positive electrode lead and the second sensing lead extend outwards from the second end through the sealed portion, the first sensing lead is disposed so as not to overlap the negative electrode lead, and the second sensing lead is disposed so as to overlap the positive electrode lead. At this time, the second sensing lead and the positive electrode lead may be coupled to each other by welding.

The second sensing lead and the positive electrode lead are coupled to each other, as described above, whereby the second sensing lead and the positive electrode lead are electrically connected to each other. Consequently, the voltage of the positive electrode lead may be measured by the first sensing lead through the second sensing lead and the wire.

Large current does not flow through the first sensing lead and the second sensing lead, and very small current necessary to merely measure voltage at a BMS flows therethrough. Consequently, the size of each of the first sensing lead and the second sensing lead may be less than the size of each of the positive electrode lead and the negative electrode lead.

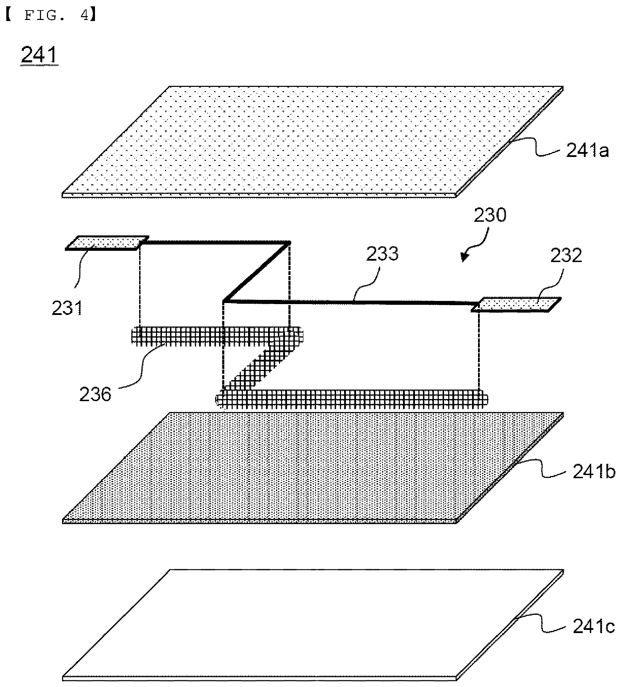

FIG. 4 is an exploded perspective view of a pouch-shaped battery case according to an embodiment.

Referring to FIG. 4, the pouch-shaped battery case is the upper case 241 shown in FIG. 3.

The pouch-shaped battery case includes an outer coating layer 241a, a metal layer 241b, and an inner adhesive layer 241c.

The outer coating layer serves to protect the battery cell from the outside. Consequently, it is required for the outer coating layer to exhibit excellent tolerance to the external environment, and therefore excellent tensile strength and weather resistance of the outer coating layer based on the thickness thereof are necessary. For example, a polyester-based resin, such as polyethylene terephthalate (PET), polybutylene terephthalate (PBT), or polyethylene naphthalate (PEN), a polyolefin-based resin, such as polyethylene (PE) or polypropylene (PP), a polystyrene-based resin, such as polystyrene, a polyvinyl chloride-based resin, or a polyvinylidene chloride-based resin may be used. These materials may be used either alone or as a mixture of two or more materials, and an oriented nylon (ONy) film is widely used.

The metal layer may be made of aluminum (Al) or an aluminum alloy in order to exhibit a function of improving strength of the battery case in addition to a function of preventing introduction of foreign matter, such as gas and moisture, or leakage of an electrolytic solution. Examples of the aluminum alloy may include alloy numbers 8079, 1N30, 8021, 3003, 3004, 3005, 3104, and 3105. These materials may be used either alone or as a combination of two or more materials.

A polymer resin that exhibits thermal fusibility, has low hygroscopicity to the electrolytic solution, and is not expanded or eroded by the electrolytic solution may be used as the inner adhesive layer. More preferably, the inner adhesive layer is made of a cast polypropylene (CPP) film.

The wire 233 is located between the outer coating layer 241a and the metal layer 241b, and the first sensing lead 231 and the second sensing lead 232 extend outwards from outer peripheries of the outer coating layer 241a and the metal layer 241b.

An insulation layer 236 is interposed between the wire 233 and the metal layer 241b, and therefore it is possible to prevent contact between the metal layer and the wire even though the metal layer is exposed in a process of shaping the pouch-shaped battery case or a degassing process.

Although the insulation layer is shown as being added to only the part corresponding to the wire in FIG. 4, an insulation layer having the same size as the area of each of the outer coating layer and the metal layer may be added, or an insulation layer configured to wrap the wire may be used.

The material for the insulation layer is not particularly restricted as long as it is possible to secure an insulation property without causing chemical change. For example, vinyl chloride, an epoxy resin, silicone, ethylene propylene rubber, mica, or ceramic may be used.

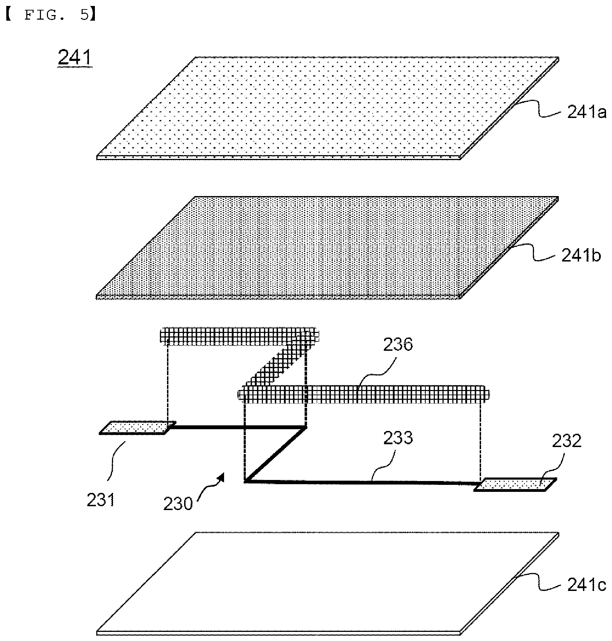

FIG. 5 is an exploded perspective view of a pouch-shaped battery case according to another embodiment.

Referring to FIG. 5, the wire 233 of the sensing member 230 is located between the inner adhesive layer 241c and the metal layer 241b, and the insulation layer 236 is located between the wire 233 and the metal layer 241b. A description of FIG. 4 may be equally applied except for the above difference.

Meanwhile, the sensing member may include a fuse provided at a part of the wire. For example, the thickness or shape of a part of a conductor constituting the wire may be changed so as to allow a specific current to flow therethrough. When overcurrent flows, the conductor may be cut, whereby electrical connection may be interrupted.

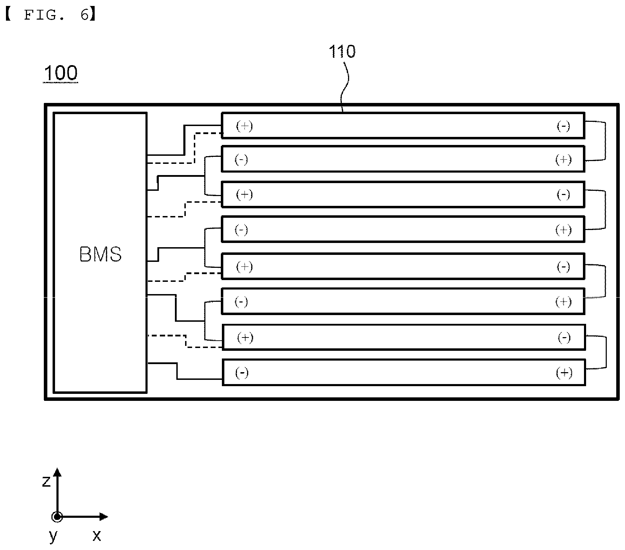

FIG. 6 is a plan view of a battery module according to the present invention.

Referring to FIG. 6, each of a plurality of pouch-shaped battery cells 110 is a pouch-shaped battery cell including the sensing member shown in FIGs. 2 to 5. The plurality of pouch-shaped battery cells 110 is stacked so as to be connected to each other in series, and a BMS is disposed at one side of the plurality of pouch-shaped battery cells 110.

Each of the plurality of pouch-shaped battery cells 110 is a bidirectional battery cell having a positive electrode lead and a negative electrode lead protruding in opposite directions. For electrical connection between the BMS and the electrode lead protruding in the direction opposite the BMS, the sensing member protrudes so as to be adjacent to the electrode lead protruding toward the BMS. In FIG. 6, electrical connection between the BMS and the sensing member is shown by a dotted line, and electrical connection between the BMS and the electrode lead is shown by a solid line.

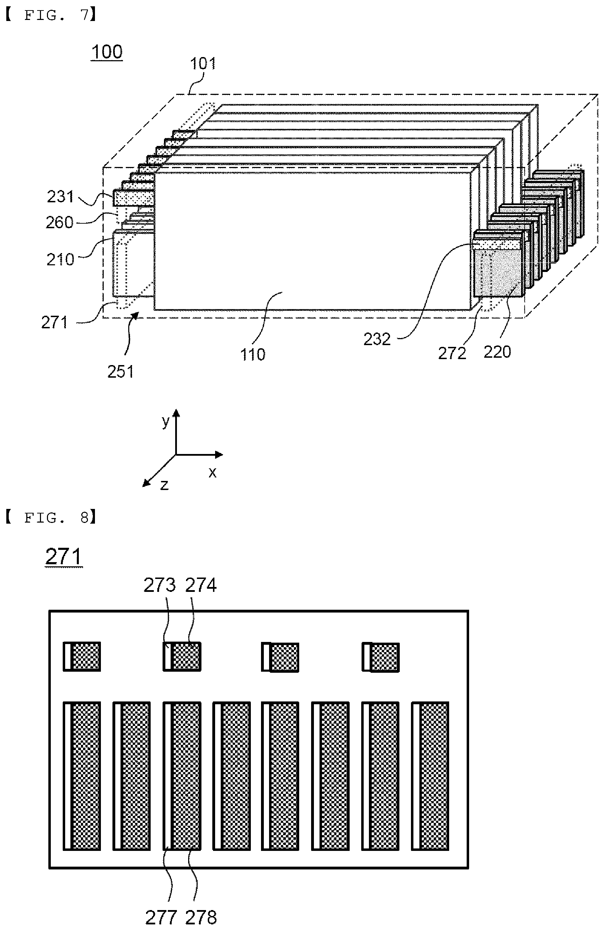

FIG. 7 is a perspective view of the battery module according to the present invention.

Referring to FIG. 7, the battery module includes a battery cell stack configured such that pouch-shaped battery cells 110 each including the sensing member shown in FIGs. 2 to 5 are stacked in tight contact with each other, a module housing 101 configured to receive the battery cell stack, a BMS 260 (shown by a dotted line) disposed outside a first end 251 of the battery cell stack, which is one of opposite ends of the battery cell stack in the overall length direction x, and busbar plates 271 and 272 (shown by dotted lines) coupled to sensing leads and electrode leads. First sensing leads 231 and positive electrode leads 210 are coupled to the busbar plate 271, and second sensing leads 232 and negative electrode leads 220 are coupled to the busbar plate 272 in a state of being coupled to each other so as to overlap each other.

The BMS 260 is connected to the sensing leads 231 and 232, the positive electrode leads 210, and the negative electrode leads 220 to measure the voltages of all of the pouch-shaped battery cells.

FIG. 8 is a plan view of a busbar plate according to the present invention.

Referring to FIG. 8, the busbar plate 271 includes a sensing lead weld portion 274 and an electrode lead weld portion 278 formed so as not to overlap each other. A sensing lead extends through a through-hole 273 formed adjacent to the sensing lead weld portion 274, protrudes out of the busbar plate, is bent at a right angle, and is welded to the sensing lead weld portion 274, and an electrode lead extends through a through-hole 277 formed adjacent to the electrode lead weld portion 278, protrudes out of the busbar plate, is bent at a right angle, and is welded to the electrode lead weld portion 278.

For the busbar plate 272 shown in FIG. 7, the sensing lead and the electrode lead coupled to each other so as to overlap each other are welded to the busbar plate, wherein only components corresponding to the through-hole 277 and the electrode lead weld portion 278 shown in FIG. 8 are included.

As described above, the pouch-shaped battery cell according to the present invention includes the sensing member provided in the pouch-shaped battery case. Even when the pouch-shaped battery cell is a bidirectional battery cell, a resistance measurement device, such as the BMS, provided at one outer periphery thereof is electrically connected to both the positive electrode and the negative electrode, whereby it is possible to measure the resistances of all of the battery cells.

Those skilled in the art to which the present invention pertains will appreciate that various applications and modifications are possible within the category of the present invention based on the above description.

### (Description of Reference Symbols)

100: Battery module
101: Module housing
110: Pouch-shaped battery cell
201: Electrode assembly
210: Positive electrode lead
211: Positive electrode tab
220: Negative electrode lead
221: Negative electrode tab
230: Sensing member
231: First sensing lead
232: Second sensing lead
233: Wire
236: Insulation layer
240: Pouch-shaped battery case
241: Upper case
241a: Outer coating layer
241b: Metal layer
241c: Inner adhesive layer
242: Lower case
244: Sealed portion
251: First end
252: Second end
260: BMS
271, 272: Busbar plates
273, 277: Through-holes
274: Sensing lead weld portion
278: Electrode lead weld portion

## Claims

1. A pouch-shaped battery cell comprising:
a pouch-shaped battery case (240); and
an electrode assembly (201) received in the pouch-shaped battery case (240), the electrode assembly (201) having a plurality of positive electrodes and a plurality of negative electrodes, positive electrode tabs (211) and negative electrode tabs (221) extending in opposite directions respectively from opposite ends of the electrode assembly (201) in an overall length direction, a positive electrode lead (210) coupled to the positive electrode tabs (211) and a negative electrode lead (220) coupled to the negative electrode tabs (221), the positive (210) and negative -220) electrode leads protruding outwards from the pouch-shaped battery case (240) through a sealed portion (244) of the pouch-shaped battery case (240),
wherein the pouch-shaped battery case (240) has a sensing member (230) configured to detect a voltage mounted therein,
**characterized in that** the sensing member (230) comprises a sensing lead (231, 232) and a wire (233), the sensing lead (231, 232) extends outwards from an outer periphery of the pouch-shaped battery case (240), and the wire (233) is mounted in the pouch-shaped battery case (240),
and wherein the pouch-shaped battery case (240) comprises an outer coating layer (241a), a metal layer (241b), and an inner adhesive layer (241c), and the wire (233) is located between the outer coating layer (241a) and the metal layer (241b) or between the inner adhesive layer (241c) and the metal layer (241b).

2. The pouch-shaped battery cell according to claim 1, wherein an insulation layer (236) is interposed between the wire (233) and the metal layer (241b).

3. The pouch-shaped battery cell according to claim 1, wherein the sensing lead (231, 232) comprises a first sensing lead (231) and a second sensing lead (232), the first (231) and second (232) sensing leads being located respectively at opposite ends of the wire (233).

4. The pouch-shaped battery cell according to claim 3, wherein opposite ends of the pouch-shaped battery case (240) in the overall length direction comprise a first end (251) and a second end (252), the first sensing lead (231) extends outwards from the first end (251) through the sealed portion (244), and the second sensing lead (232) extends outwards from the second end (252) through the sealed portion (244).

5. The pouch-shaped battery cell according to claim 4, wherein the positive electrode lead (210) and the first sensing lead (231) extend outwards from the first end (251) through the sealed portion (244), the negative electrode lead (220) and the second sensing lead (232) extend outwards from the second end (252) through the sealed portion (244), the first sensing lead (231) does not overlap the positive electrode lead (210), and the second sensing lead (232) overlaps the negative electrode lead (220).

6. The pouch-shaped battery cell according to claim 4, wherein the negative electrode lead (220) and the first sensing lead (231) extend outwards from the first end (251) through the sealed portion (244), the positive electrode lead (210) and the second sensing lead (232) extend outwards from the second end (252) through the sealed portion (244), the first sensing lead (231) does not overlap the negative electrode lead (220), and the second sensing lead (232) overlaps the positive electrode lead (210).

7. The pouch-shaped battery cell according to claim 3, wherein a size of each of the first sensing lead (231) and the second sensing lead (232) is less than a size of each of the positive electrode lead (210) and the negative electrode lead (220).

8. The pouch-shaped battery cell according to claim 1, wherein the sensing member (230) comprises a fuse.

9. A battery module comprising the pouch-shaped battery cell according to any one of claims 1 to 8, the battery module (100) comprising:
a battery cell stack comprising a plurality of pouch-shaped battery cells (110) stacked in tight contact with each other;
a module housing (101) containing the battery cell stack therein;
a BMS (260) disposed outside a first end (251) of the battery cell stack, the first end (251) of the battery cell stack being one of opposite ends of the battery cell stack in an overall length direction, and
a busbar plate (271, 272) coupled to a sensing lead (231, 232) and an electrode lead (210, 220), the busbar plate (271, 272) having a sensing lead weld portion (274) and an electrode lead weld portion (278).

10. The battery module according to claim 9, wherein the BMS (260) is connected to the sensing lead (231, 232) and the electrode lead (210, 220), the BMS (260) being configured to measure voltage of each of the pouch-shaped battery cells (110).

## Patentansprüche

1. Beutelförmige Batteriezelle, umfassend:
ein beutelförmiges Batteriegehäuse (240), und
eine Elektrodenanordnung (201), welche in dem beutelförmigen Batteriegehäuse (240) aufgenommen ist, wobei die Elektrodenanordnung (201) eine Mehrzahl von positiven Elektroden und eine Mehrzahl von negativen Elektroden, positive Elektrodenlaschen (211) und negative Elektrodenlaschen (221), welche sich in einer Gesamtlängsrichtung in entgegengesetzten Richtungen jeweils von entgegengesetzten Enden der Elektrodenanordnung (201) erstrecken, eine positive Elektrodenleitung (210), welche mit den positiven Elektrodenlaschen (211) gekoppelt ist, und eine negative Elektrodenleitung (220) aufweist, welche mit den negativen Elektrodenlaschen (221) gekoppelt ist, wobei sich die positive (210) und die negative (220) Elektrodenleitung von dem beutelförmigen Batteriegehäuse (240) durch einen abgedichteten Abschnitt (244) des beutelförmigen Batteriegehäuses (240) nach außen erstrecken,
wobei das beutelförmige Batteriegehäuse (240) ein darin angebrachtes Messelement (230) aufweist, welches dazu eingerichtet ist, eine Spannung zu messen,
**dadurch gekennzeichnet, dass** das Messelement (230) eine Messleitung (231, 232) und einen Draht (233) umfasst, wobei sich die Messleitung (231, 232) von einem äußeren Umfang des beutelförmigen Batteriegehäuses (240) nach außen erstreckt und den Draht (233) in dem beutelförmigen Batteriegehäuses (240) angebracht ist,
und wobei das beutelförmige Batteriegehäuse (240) eine äußere Beschichtungsschicht (241a), eine Metallschicht (241b) und eine innere Haftschicht (241c) umfasst, und sich der Draht (233) zwischen der äußeren Beschichtungsschicht (241a) und der Metallschicht (241b) oder zwischen der inneren Haftschicht (241c) und der Metallschicht (241b) befindet.

2. Beutelförmige Batteriezelle nach Anspruch 1, wobei eine isolierende Schicht (236) zwischen dem Draht (233) und der Metallschicht (241b) eingefügt ist.

3. Beutelförmige Batteriezelle nach Anspruch 1, wobei die Messleitung (231, 232) eine erste Messleitung (231) und eine zweite Messleitung (232) umfasst, wobei sich die erste (231) und die zweite (232) Messleitung jeweils an entgegengesetzten Enden des Drahts (233) befinden.

4. Beutelförmige Batteriezelle nach Anspruch 3, wobei entgegengesetzte Enden des beutelförmigen Batteriegehäuses (240) in der Gesamtlängsrichtung ein erstes Ende (251) und ein zweites Ende (252) umfassen, wobei sich die erste Messleitung (231) von dem ersten Ende (251) durch den abgedichteten Abschnitt (244) nach außen erstreckt und sich die zweite Messleitung (232) von dem zweiten Ende (252) durch den abgedichteten Abschnitt (244) nach außen erstreckt.

5. Beutelförmige Batteriezelle nach Anspruch 4, wobei sich die positive Elektrodenleitung (210) und die erste Messleitung (231) von dem ersten Ende (251) durch den abgedichteten Abschnitt (244) nach außen erstrecken, sich die negative Elektrodenleitung (220) und die zweite Messleitung (232) von dem zweiten Ende (252) durch den abgedichteten Abschnitt (244) nach außen erstrecken, die erste Messleitung (231) die positive Elektrodenleitung (210) nicht überlagert und die zweite Messleitung (232) die negative Elektrodenleitung (220) überlagert.

6. Beutelförmige Batteriezelle nach Anspruch 4, wobei sich die negative Elektrodenleitung (220) und die erste Messleitung (231) von dem ersten Ende (251) durch den abgedichteten Abschnitt (244) nach außen erstrecken, sich die positive Elektrodenleitung (210) und die zweite Messleitung (232) von dem zweiten Ende (252) durch den abgedichteten Abschnitt (244) nach außen erstrecken, die erste Messleitung (231) nicht die negative Elektrodenleitung (220) überlagert und die zweite Messleitung (232) die positive Elektrodenleitung (210) überlagert.

7. Beutelförmige Batteriezelle nach Anspruch 3, wobei eine Größe jeder der ersten Messleitung (231) und der zweiten Messleitung (232) geringer als eine Größe jeder der positiven Elektrodenleitung (210) und der negativen Elektrodenleitung (220) ist.

8. Beutelförmige Batteriezelle nach Anspruch 1, wobei das Messelement (230) eine Sicherung umfasst.

9. Batteriemodul, umfassend die beutelförmige Batteriezelle nach einem der Ansprüche 1 bis 8, wobei das Batteriemodul (100) umfasst:
einen Batteriezellenstapel, welcher eine Mehrzahl von beutelförmigen Batteriezellen (110) umfasst, welche in engem Kontakt zueinander gestapelt sind;
ein Modulgehäuse (101), welches den Batteriezellenstapel darin beinhaltet;
ein BMS (260), welches außerhalb eines ersten Endes (251) des Batteriezellenstapels angeordnet ist, wobei das erste Ende (251) des Batteriezellenstapels eines von entgegengesetzten Enden des Batteriezellenstapels in einer Gesamtlängsrichtung ist, und
eine Sammelschienenplatte (271, 272), welche mit einer Messleitung (231, 232) und einer Elektrodenleitung (210, 220) gekoppelt ist, wobei die Sammelschienenplatte (271, 272) einen Messleitung-Schweißabschnitt (274) und einen Elektrodenleitung-Schweißabschnitt (278) aufweist.

10. Batteriemodul nach Anspruch 9, wobei das BMS (260) mit der Messleitung (231, 232) und der Elektrodenleitung (210, 220) verbunden ist, wobei das BMS (260) dazu eingerichtet ist, eine Spannung jeder der beutelförmigen Batteriezellen (110) zu messen.

## Revendications

1. Cellule de batterie en forme de poche comprenant :
un boîtier de batterie en forme de poche (240) ; et
un ensemble d'électrodes (201) reçu dans le boîtier de batterie en forme de poche (240), l'ensemble d'électrodes (201) ayant une pluralité d'électrodes positives et une pluralité d'électrodes négatives, des languettes d'électrode positive (211) et des languettes d'électrode négative (221) s'étendant dans des directions opposées respectivement à partir d'extrémités opposées de l'ensemble d'électrodes (201) dans une direction de longueur globale, un conducteur d'électrode positive (210) couplé aux languettes d'électrode positive (211) et un conducteur d'électrode négative (220) couplé aux languettes d'électrode négative (221), les conducteurs d'électrode positive (210) et d'électrode négative (220) faisant saillie vers l'extérieur à partir du boîtier de batterie en forme de poche (240) à travers une partie étanche (244) du boîtier de batterie en forme de poche (240),
dans laquelle le boîtier de batterie en forme de poche (240) a, monté à l'intérieur, un organe de détection (230) configuré pour détecter une tension,
**caractérisé en ce que** l'organe de détection (230) comprend une conducteur de détection (231, 232) et un fil (233), le conducteur de détection (231, 232) s'étend vers l'extérieur à partir d'une périphérie externe du boîtier de batterie en forme de poche (240), et le fil (233) est monté dans le boîtier de batterie en forme de poche (240), et dans lequel le boîtier de batterie en forme de poche (240) comprend une couche de revêtement externe (241a), une couche métallique (241b) et une couche adhésive interne (241c), et le fil (233) est situé entre la couche de revêtement externe (241a) et la couche métallique (241b) ou entre la couche adhésive interne (241c) et la couche métallique (241b).

2. Cellule de batterie en forme de poche selon la revendication 1, dans laquelle une couche d'isolation (236) est interposée entre le fil (233) et la couche métallique (241b).

3. Cellule de batterie en forme de poche selon la revendication 1, dans laquelle le conducteur de détection (231, 232) comprend un premier conducteur de détection (231) et un second conducteur de détection (232), les premier (231) et second (232) conducteurs de détection étant situés respectivement à des extrémités opposées du fil (233).

4. Cellule de batterie en forme de poche selon la revendication 3, dans laquelle des extrémités opposées du boîtier de batterie en forme de poche (240) dans la direction de longueur globale comprennent une première extrémité (251) et une seconde extrémité (252), le premier conducteur de détection (231) s'étend vers l'extérieur à partir de la première extrémité (251) à travers la partie étanche (244), et le second conducteur de détection (232) s'étend vers l'extérieur à partir de la seconde extrémité (252) à travers la partie étanche (244).

5. Cellule de batterie en forme de poche selon la revendication 4, dans laquelle le conducteur d'électrode positive (210) et le premier conducteur de détection (231) s'étendent vers l'extérieur à partir de la première extrémité (251) à travers la partie étanche (244), le conducteur d'électrode négative (220) et le second conducteur de détection (232) s'étendent vers l'extérieur à partir de la seconde extrémité (252) à travers la partie étanche (244), le premier conducteur de détection (231) ne chevauche pas le conducteur d'électrode positive (210), et le second conducteur de détection (232) chevauche le conducteur d'électrode négative (220).

6. Cellule de batterie en forme de poche selon la revendication 4, dans laquelle le conducteur d'électrode négative (220) et le premier conducteur de détection (231) s'étendent vers l'extérieur à partir de la première extrémité (251) à travers la partie étanche (244), le conducteur d'électrode positive (210) et le second conducteur de détection (232) s'étendent vers l'extérieur à partir de la seconde extrémité (252) à travers la partie étanche (244), le premier conducteur de détection (231) ne chevauche pas le conducteur d'électrode négative (220), et le second conducteur de détection (232) chevauche le conducteur d'électrode positive (210).

7. Cellule de batterie en forme de poche selon la revendication 3, dans laquelle une taille de chacun du premier conducteur de détection (231) et du second conducteur de détection (232) est inférieure à une taille de chacun du conducteur d'électrode positive (210) et du conducteur d'électrode négative (220).

8. Cellule de batterie en forme de poche selon la revendication 1, dans laquelle l'organe de détection (230) comprend un fusible.

9. Module de batterie comprenant la cellule de batterie en forme de poche selon l'une quelconque des revendications 1 à 8, le module de batterie (100) comprenant :
un empilement de cellules de batterie comprenant une pluralité de cellules de batterie en forme de poche (110), empilées en contact étroit les unes avec les autres ;
un boîtier de module (101) contenant l'empilement de cellules de batterie à l'intérieur ;
un système de gestion de batterie BMS (260) disposé à l'extérieur d'une première extrémité (251) de l'empilement de cellules de batterie, la première extrémité (251) de l'empilement de cellules de batterie étant l'une d'extrémités opposées de l'empilement de cellules de batterie dans une direction de longueur globale, et
une plaque de barre omnibus (271, 272) couplée à un conducteur de détection (231, 232) et à un conducteur d'électrode (210, 220), la plaque de barre omnibus (271, 272) ayant une partie soudée de conducteur de détection (274) et une partie soudée de conducteur d'électrode (278).

10. Module de batterie selon la revendication 9, dans lequel le BMS (260) est connecté au conducteur de détection (231, 232) et au conducteur d'électrode (210, 220), le BMS (260) étant configuré pour mesurer une tension de chacune des cellules de batterie en forme de poche (110).
